# EUROPEAN PATENT APPLICATION

(11) **EP 4 769 130 A1**
(43) Date of publication of application: **01.07.2026**
(21) Application number: 25214554.5
(22) Date of filing: 10.11.2025
(51) Int. Cl.: G06F 9/38

(54) **LOAD VALUE PREDICTION BASED ELIMINATION OF EXECUTION OF INSTRUCTIONS THAT COMPUTE CONSTANT VALUES**

(30) Priority: 27.12.2024 US 202419004199
(71) Applicant: Intel Corporation, Santa Clara, CA 95054 (US)
(72) Inventor: MAHTO, Sujit, 560048 Bangalore (IN); RANGANATHAN, Adithya, 560048 Bengaluru (IN); GAUR, Jayesh, 560066 Bengaluru (IN); SUBRAMONEY, Sreenivas, 560103 Bangalore (IN)
(74) Representative: Viering, Jentschura & Partner mbB Patent- und Rechtsanwälte

(57) **Abstract**

A method of an aspect includes predicting a value that a load instruction of a first iteration of a loop would load and executing a plurality of instructions occurring after the load instruction in the first iteration of the loop to generate a plurality of results. Each of the plurality of results depends only on the value, one or more constant values, values derived from the value and/or the one or more constant values, or any combination thereof. The method also includes producing the plurality of results for the plurality of instructions during each of one or more iterations of the loop after the first iteration without re-executing the plurality of instructions. Other methods, apparatus, and systems are also disclosed.

## Description

### BACKGROUND

### Technical Field

Embodiments described herein generally relate to processors. In particular, embodiments described herein generally relate to execution of instructions in processors.

### Background Information

Processors commonly execute load instructions to load data from system memory into registers of the processors. The load instructions are sometimes referred to by other names, such as, for example, move instructions, swap instructions, etc. In some cases, the load instructions may be included in loops and may be executed during each iteration of the loop. In such cases, compute or data processing instructions may also be included in the loops and may be executed during each iteration of the loop to perform computations or data processing on the data loaded by the load instructions to generate results.

### BRIEF DESCRIPTION OF THE DRAWINGS

Various examples in accordance with the present disclosure will be described with reference to the drawings, in which:
**FIG. 1** shows a detailed illustrative example of a loop that may be included in software or code.
**FIG. 2A** is a block flow diagram of an embodiment of a method.
**FIG. 2B** is a block diagram of an example embodiment of an execution elimination structure.
**FIG. 3** is a block flow diagram of an embodiment of a method of training or otherwise populating an execution elimination structure.
**FIG. 4** is a block diagram of a detailed example embodiment of an execution elimination structure trained or populated with state based on the specific example loop of FIG. 1.
**FIG. 5** is a block diagram of an embodiment of an allocation stage of a processor.
**FIG. 6** illustrates an example computing system.
**FIG. 7** illustrates a block diagram of an example processor and/or System on a Chip (SoC) that may have one or more cores and an integrated memory controller.
**FIG. 8(A)** is a block diagram illustrating both an example in-order pipeline and an example register renaming, out-of-order issue/execution pipeline according to examples.
**FIG. 8(B)** is a block diagram illustrating both an example in-order architecture core and an example register renaming, out-of-order issue/execution architecture core to be included in a processor according to examples.
**FIG. 9** illustrates examples of execution unit(s) circuitry.
**FIG. 10** is a block diagram of a register architecture according to some examples.
**FIG. 11** illustrates examples of an instruction format.
**FIG. 12** illustrates examples of an addressing information field.
**FIG. 13** illustrates examples of a first prefix.
**FIGS. 14(A)****-(D)** illustrate examples of how the R, X, and B fields of the first prefix in **FIG. 13** are used.
**FIGS. 15(A)****-(B)** illustrate examples of a second prefix.
**FIG. 16** illustrates examples of a third prefix.
**FIG. 17** is a block diagram illustrating the use of a software instruction converter to convert binary instructions in a source instruction set architecture to binary instructions in a target instruction set architecture according to examples.

### DETAILED DESCRIPTION OF EMBODIMENTS

Disclosed herein are methods, apparatus, systems, and non-transitory computer-readable storage media to eliminate execution of compute instructions that compute constant values based on load value prediction. In the following description, numerous specific details are set forth (e.g., specific structures, microarchitectural details, types of loops, types of instructions, processor configurations, sequences of operations, etc.). However, embodiments may be practiced without these specific details. In other instances, well-known circuits, structures, and techniques have not been shown in detail to avoid obscuring the understanding of the description.

As mentioned in the background section, processors commonly execute load instructions to load data from system memory into registers of the processors. The load instructions are sometimes referred to by other names, such as, for example, move instructions, swap instructions, etc. In some cases, the load instructions may be included in loops and may be executed during each iteration of the loop. If the data is not changed or modified between the different iterations of the loop (e.g., by another entity in the system overwriting the data), then the load instructions may reload the same data during each iteration of the loop. Executing the load instructions takes time and consumes power. As such, unnecessarily reloading the same data multiple times represents a form of inefficiency that tends to limit performance and increase power consumption. Compute or data processing instructions may also be included in the loops and may be executed during each iteration of the loop. Some such compute or data processing instructions may perform computations or data processing that only depend on the data loaded by the load instructions and constant values. Such compute or data processing instructions will perform the same computations or data processing on the same loaded data to generate the same results during each iteration of the loop. Executing these compute or data processing instructions takes time and consumes power. As such, unnecessarily generating the same results multiple times represents a form of inefficiency that tends to limit performance and increase power consumption.

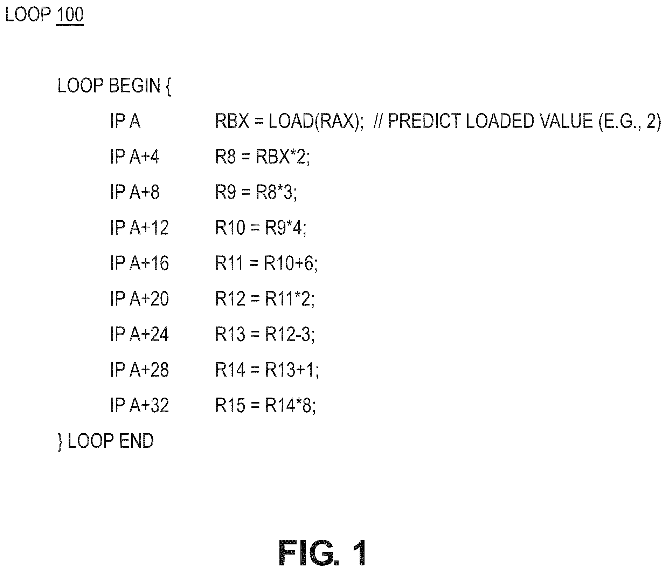

**FIG. 1** shows a detailed illustrative example of a loop 100 (e.g., that may be included in software or code). The loop has a generic "loop begin" instruction and a "loop end" instruction. Different types of instructions may be used to implement the loop begin and loop end instructions, such as, for example, branch instructions, jump instructions, and other types of control flow transfer instructions.

In this example, nine instructions are included within the body of the loop. In this example, the instructions are examples of instructions in the x86 instruction set architecture. In other embodiments, instructions of other instruction set architectures may be used instead. Each instruction within the loop has a corresponding instruction pointer (IP). The instruction pointer may represent a pointer, address, or other value that indicates the address or location in system memory of the corresponding instruction. The instruction pointer is also sometimes referred to as a program counter. In this example, the instructions operate on example registers of the processor RAX, RBX, and R8-R15. RAX, RBX, and R8-R15 are general-purpose registers for 64-bit operands in the x86 instruction set architecture. These registers may broadly represent general-purpose registers or simply registers of the processor. In other embodiments, other registers may optionally be used instead (e.g., registers of other operand sizes, registers of other types, registers of other instruction set architectures, etc.).

The nine instructions include a first instruction having an instruction pointer A, a second instruction having an instruction pointer A+4, a third instruction having an instruction pointer A+8, a fourth instruction having an instruction pointer A+12, a fifth instruction having an instruction pointer A+16, a sixth instruction having an instruction pointer A+20, a seventh instruction having an instruction pointer A+24, an eighth instruction having an instruction pointer A+28, and a nineth instruction having an instruction pointer A+32. The instruction pointer A may represent any appropriate instruction pointer value (e.g., some address or pointer in system memory where the first instruction of the loop is located). The "+4" increments A by four 8-bit bytes, "+8" increments A by eight 8-bit bytes, and so on. The labels first, second, third, fourth, fifth, sixth, seventh, eighth, and nineth are used further below to refer to the specific instructions set forth in this paragraph.

The first instruction "RBX = LOAD(RAX)" is a load instruction that when executed causes the processor to load data (e.g., a data element, a value, etc.) from an address or location in system memory indicated by data from a source register RAX, and store the loaded data into a destination register RBX. In this illustrative example, consider that the loaded data has a value of two.

A second instruction "R8=RBX*2" is an arithmetic data processing instruction (e.g., as opposed to an instruction that merely moves data from one register to another) that when executed causes the processor to multiply the data in a source register RBX by two and then store the result in a destination register R8. Notice that the source register RBX of the second instruction is the destination register RBX of the first instruction. Also notice that the result of the second instruction depends only on the loaded data in RBX and the constant multiplier value of two. After execution of the second instruction, the register R8 will store a value that is twice the loaded value (e.g., four in this illustrative example).

A third instruction "R9=R8*3" is an arithmetic data processing instruction that when executed causes the processor to multiply the data in a source register R8 by three and store the result in a destination register R9. Notice that the source register R8 of the third instruction is the destination register R8 of the second instruction. Also notice that the result of the third instruction depends only on the constant multiplier value of three and the result of the second instruction (e.g., which as described above depends only on the loaded data in RBX and the constant multiplier value of two). After execution of the third instruction, the register R9 will store a value that is six times the loaded value (e.g., twelve in this illustrative example).

A fourth instruction "R10=R9*4" is an arithmetic data processing instruction that when executed causes the processor to multiply the data in a source register R9 by four and store the result in a destination register R10. Notice that the source register R9 of the fourth instruction is the destination register R8 of the third instruction. Also notice that the result of the fourth instruction depends only on the constant multiplier value of four and the result of the third instruction (e.g., which as described above depends only on the loaded data and constant values). After execution of the fourth instruction, the register R10 will store a value that is twenty-four times the loaded value (e.g., forty-eight in this illustrative example).

A fifth instruction "R11=R10+6," a sixth instruction "R12=R11+2," a seventh instruction "R13=R12-3," an eighth instruction "R14=R13+1," and a nineth instruction "R15=R14*8" are also shown. Notice that each of the fifth through nineth instructions similarly has a source register that is a destination register of a prior instruction in the loop. Also notice that results of each of the fifth through nineth instructions similarly depend only on the loaded data and constant values that remain constant during each iteration of the loop (e.g., the illustrated integers 2, 3, 4, 6, 2, 3, 1, and 8). As a result, if the loaded data (e.g., the data loaded by the first instruction) remains the same, then the results of each of the second through nineth instructions will also remain the same.

Conventionally, each of the first through nineth instructions would be executed during each iteration of the loop. For example, the first instruction "RBX = LOAD(RAX)" would be executed during each iteration of the loop to load data from the address or location in system memory indicated by the data from the source register RAX and store the loaded data into a destination register RBX. If the data at that address has not been changed or modified (e.g., by another entity in the system performing writing to that address), then the same data will be reloaded during each iteration of the loop. Executing the load instructions takes time and consumes power. As such, unnecessarily reloading the same data multiple times represents a form of inefficiency that tends to limit performance and increase power consumption. Also, each of the second through nineth data processing instructions would be executed during each iteration of the loop. These data processing instructions perform computations or data processing that depends only on the data loaded by the load instructions and constant values (e.g., 2, 3, 4, 6, 2, 3, 1, and 8). If the loaded data has not been changed or modified, then each of the second through nineth instructions when re-executed will perform the same computations or data processing on the same loaded data to generate the same results during each iteration of the loop. Executing these compute or data processing instructions takes time and consumes power. As such, unnecessarily generating the same results multiple times represents a form of inefficiency that tends to limit performance and increase power consumption.

To help improve performance and/or reduce power consumption, in some embodiments a processor may utilize constant load value prediction to predict the value of a load instruction (e.g., the first instruction RBX=LOAD(RAX)). By way of example, the processors may track load instructions being executed (e.g., using their corresponding instruction pointers as identifiers) and the data loaded by the load instructions. Then, the processor may predict that subsequent instances of the same load instructions (e.g., the load instructions having the same instruction pointers) will reload the same data again. Based on this, the processor may simply output or provide the predicted data for the load instructions without needing to perform a load operation to reload the same data again. For example, the first instruction "RBX=LOAD(RAX)" may be converted to "RBX=MOV(0x2)," which may merely move the load predicted value (e.g., two in this illustrative example) from an immediate of the MOV instruction (e.g., shown as "0x2") to the destination register RBX. This may help to improve performance by avoiding latencies associated with reloading the same data. This may also help to improve performance by allowing subsequent instructions (e.g., the second through nineth instructions) to be executed sooner (e.g., they may be dispatched for execution as soon as they are allocated in the out-of-order portion of the processor, since the constant load value prediction happens earlier (e.g., at allocation).

In some embodiments, to help improve performance and/or reduce power consumption, a processor may implement the loop more efficiently by leveraging the fact that each of the second through nineth instructions perform computations or data processing that depends only on the data loaded by the load instruction into register RBX or results derived therefrom using only constant values (e.g., in this example the integers 2, 3, 4, 6, 2, 3, 1, and 8 that remain constant for each iteration of the loop). As a result, if the data loaded into register RBX by the first instruction remains the same, then the results of each of the second through nineth instructions will also remain the same. Based on this, in some embodiments, the second through nineth instructions may only be executed a single time (e.g., during an initial or early iteration where the constant value load prediction is first used to predict the data loaded by the first instruction RBX=LOAD(RAX). The results generated by executing each of the second through nineth instructions may be stored or preserved. For example, physical registers may be assigned for each of the general-purpose or logical registers RBX and R8-R15 during register renaming and the results of each of the first through nineth instructions may be stored or preserved in these assigned physical registers. During subsequent iterations of the loop, as long as the value predicted for the first instruction remains the same, the second through nineth instructions need not be re-executed (e.g., since the stored or preserved results will be identical to those that would be recomputed if the second through nineth instructions were re-executed). Rather, during these subsequent iterations, each of the second through nineth instructions may be marked for elimination from execution by pointing the destination physical registers of the subsequent instances of the second through nineth instructions to the destination physical registers previously used to store or preserve the results of the executed instances of the second through nineth instructions. Eliminating the execution of the second through nineth instructions in the subsequent iterations of the loop instructions may help to improve performance and/or reduce power consumption.

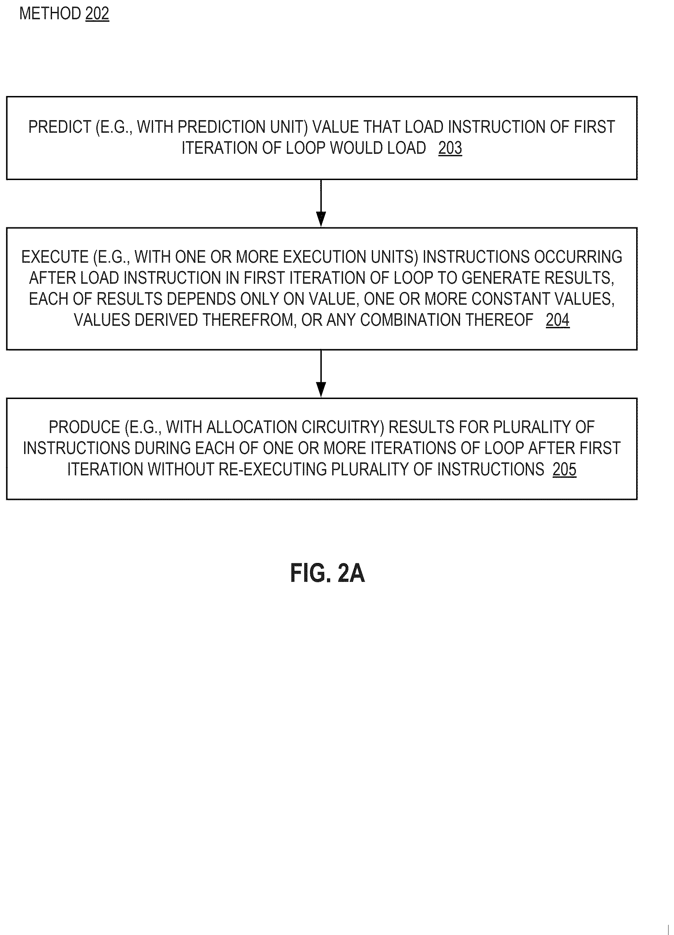

**FIG. 2A** is a block flow diagram of an embodiment of a method 202 performed by a processor. The method includes predicting (e.g., with a prediction unit of the processor) a value that a load instruction of a first iteration of a loop would load, at block 203. For example, the value (e.g., 2) that the first instruction RBX=LOAD(RAX) would load may be predicted. The method includes executing (e.g., with one or more execution units of the processor) a plurality of instructions occurring after the load instruction in the first iteration of the loop to generate a plurality of results, at block 204. For example, this may include executing each of the second through nineth instructions during the first iteration of the loop 100. Each of the plurality of results depends only on the value, one or more constant values, values derived therefrom, or any combination thereof. For example, each of the results of the second through nineth instructions in the loop 100 depends only on the value loaded (e.g., 2), one or more constants (e.g., 2, 3, 4, 5, 2, 3, 1, and 8) and in some cases one or more values derived therefrom (e.g., the value in R8 is derived from the value loaded and the constant 2 and R9 is derived from the value in R8). The method also includes producing (e.g., at an allocation stage and/or with allocation circuitry of the processor) the plurality of results for the plurality of instructions during each of one or more iterations of the loop after the first iteration without re-executing the plurality of instructions, at block 205. In some embodiments, the plurality of results generated for the first iteration may be stored in a plurality of physical registers (e.g., destination physical registers of the instructions) and producing the results may include producing the stored plurality of results from the plurality of physical registers (e.g., the destination physical registers of the instructions) during each of the one or more iterations. For example, results of each of the second through nineth instructions may be stored in physical registers indicated by physical register identifiers in an execution elimination structure (e.g., as disclosed further below) during the first iteration, and then the results may be produced from the physical registers based on the execution elimination structure during each of one or more subsequent iterations.

In some embodiments, an execution elimination structure may be used to determine instructions that need not be executed. The execution elimination structure may be trained or otherwise populated during one execution of a loop or other set of instructions when data of a load instruction is constant load value predicted. Then, the execution elimination structure may be used to determine instructions that need not be executed.

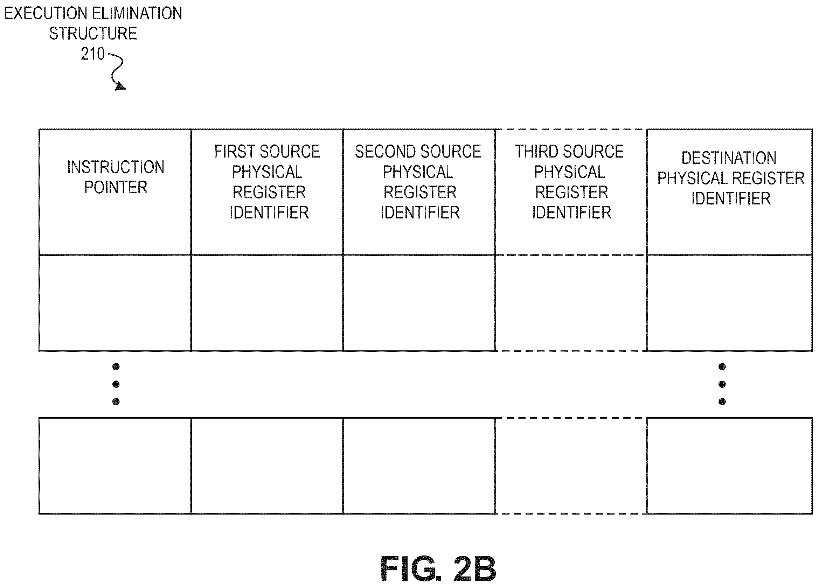

**FIG. 2B** is a block diagram of an example embodiment of an execution elimination structure 210. The execution elimination structure may be implemented in storage, a hardware implemented data structure, or the like. As one specific example, the execution elimination structure may be implemented in a content addressable memory (CAM) or similar associative memory or associative storage. The illustrated execution elimination structure is formatted as a table having columns and rows, although other arrangements and/or other types of data structures may optionally be used instead. The illustrated table has five columns. A topmost row is a header row that indicates the type of data stored in each of the five columns. As indicated by the header row, the first (e.g., leftmost) column is used to store the instruction pointers (IPs) of the instructions corresponding to the rows. The second column is used to store first source physical register identifiers that identify first source physical registers (e.g., mapped to first source logical registers) of the instructions corresponding to the rows. The third column is used to store second source physical register identifiers that identify second source physical registers (e.g., mapped to second source logical registers) of the instructions corresponding to the rows. The fourth column (which is optional) is used to store third source physical register identifiers that identify third source physical registers (e.g., mapped to third source logical registers) of the instructions corresponding to the rows. Some instruction set architectures may not support instructions having three source registers and, in such cases, the fourth column may not be included. The fifth column is used to store destination physical register identifiers that identify destination physical registers (e.g., mapped to destination logical registers) of the instructions corresponding to the rows.

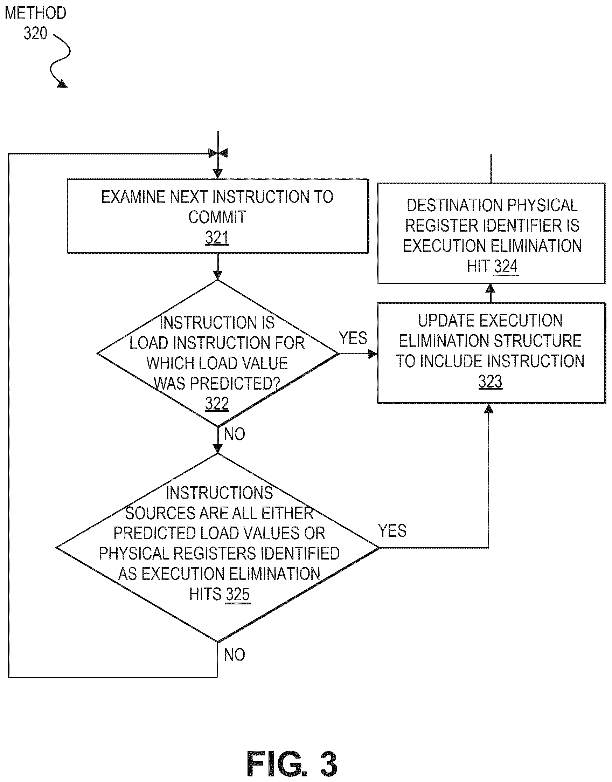

**FIG. 3** is a block flow diagram of an embodiment of a method 320 of training or otherwise populating an execution elimination structure. In some embodiments, the training or populating of the execution elimination structure may be started or initiated during a first, second, or other initial iteration of the loop when constant load value prediction is first used to predict data loaded by a load instruction and that load instruction is next to be retired or otherwise committed. The method includes examining the next instruction to be retired or otherwise committed (e.g., by a retirement unit, a commit unit, etc.), at block 321. For example, instructions being committed from a reorder buffer (ROB) may be examined.

At block 322, a determination may be made whether the instruction is a load instruction for which a load value was predicted. If the instruction is a load instruction for which a load value was predicted (e.g., "yes" is the determination at block 322), then the method may advance to block 323. At block 323, the execution elimination structure may be updated to include the instruction. For example, the execution elimination structure (e.g., a row or other entry thereof) may be updated to include the instruction pointer of the instruction, the source predicted load value, and a destination physical register identifier identifying a destination physical register (e.g., used to store the predicted load value and/or mapped to the destination general-purpose or other logical register of the instruction).

The method may then advance to block 324 where the destination physical register identifier of the instruction may be marked as an execution elimination hit. This may include storing execution elimination hit information for the destination physical register identifiers. In some embodiments, the execution elimination hit information may be stored in a new execution elimination hit field in entries for the corresponding physical register identifiers in an existing register renaming structure or unit (e.g., a register alias table, a register rename unit, etc.). For example, the entries may be extended to include an execution elimination hit field to store a single bit of execution elimination hit information that may have a first binary value (e.g., be set to binary one according to one possible convention) to indicate an execution elimination hit or have a second binary value (e.g., be cleared to binary zero according to one possible convention) to indicate the lack of an execution elimination hit. This execution elimination hit information may be used during training to help determine whether the sources of instructions remain constant and whether those instructions should be added or allocated into the execution elimination structure. The method may advance from block 324 to block 321 where the next instruction to commit may be examined.

If at block 322 the instruction is not a load instruction for which a load value was predicted (e.g., "no" is the determination at block 322), then the method may advance to block 325. At block 325, a determination may be made whether the sources of the instruction are all either predicted load values and/or physical registers identified as execution elimination hits. If that is the case (e.g., "yes" is the determination at block 325), then the method may advance to block 323. At block 323, the execution elimination structure may be updated to include the instruction. For example, the execution elimination structure (e.g., a row or other entry thereof) may be updated to include the instruction pointer of the instruction, the sources of the instruction (e.g., predicted load values and/or source physical register identifiers identifying source physical registers (e.g., mapped to the source general-purpose or other logical registers of the instruction), and a destination physical register identifier identifying a destination physical register (e.g., used to store the predicted load value and/or mapped to the destination general-purpose or other logical register of the instruction). Then, at block 324, the destination physical register identifier of the instruction may be marked as an execution elimination hit. The method may then return to block 321 where the next instruction to commit may be examined.

Alternatively, if "no" is the determination at block 325, then the method may return to block 321. At block 321, the next instruction to commit may be examined. This process may be repeated for all the instructions of the loop to train or populate the execution elimination structure with state for instructions of the loop that need not be executed on subsequent iterations of the loop.

To further illustrate, consider how the first through third instructions of the loop 100 of FIG. 1 may be processed by the method. For the first instruction RBX = load(RAX), the determination at block 322 may be "yes." Consider that RBX is assigned to a first physical register identifier (PRID1). The first instruction will be added to the execution elimination structure at block 323 and at block 324 the destination PRID1 will be marked as an execution elimination hit. For the second instruction R8 = RBX*2, the determination at block 322 may be "no" and the determination at block 325 may be "yes." Making this "yes" determination at block 325 may include recognizing that PRID1 (which is assigned to RBX) was previously marked as an execution elimination hit. Consider that R8 is assigned to a second physical register identifier (PRID2). The second instruction will be added to the execution elimination structure at block 323 and at block 324 the destination PRID2 will be marked as an execution elimination hit. For the third instruction R9 = R8*3, the determination at block 322 may be "no" and the determination at block 325 may be "yes." Making this "yes" determination at block 325 may include recognizing that PRID2 (which is assigned to R8) was previously marked as an execution elimination hit. Consider that R9 is assigned to a third physical register identifier (PRID3). The third instruction will be added to the execution elimination structure at block 323 and at block 324 the destination PRID3 will be marked as an execution elimination hit.

The method 320 has been described in a relatively basic form, but operations may optionally be added to and/or removed from the method. In addition, while the flow diagram shows a particular order of operations according to embodiments, that order is exemplary. Alternate embodiments may perform the operations in different order, combine certain operations, overlap certain operations, etc.

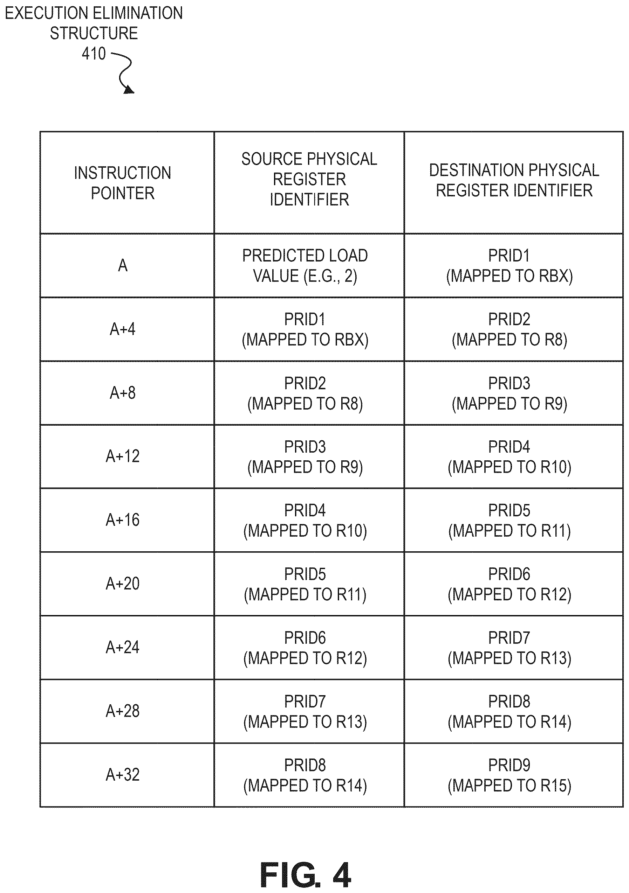

**FIG. 4** is a block diagram of a detailed example embodiment of an execution elimination structure 410 trained or populated with state based on the specific example loop 100 of **FIG. 1****.** The execution elimination structure 410 may be implemented in various ways as previously described (e.g., in a storage, a hardware implemented data structure, etc.). The illustrated execution elimination structure is formatted as a table having columns and rows, although other arrangements and/or other types of data structures may optionally be used instead. The illustrated table has three columns. There may optionally be additional columns (e.g., as described for **FIG. 2B****),** but such additional columns are not needed for the instructions of the loop 100, so for simplicity these additional columns are not shown.

A topmost row is a header row that indicates the type of data stored in each of the three columns. As indicated by the header row, the first (e.g., leftmost) column is used to store the instruction pointers (IPs) of the instructions corresponding to the rows. The second column is used to store source physical register identifiers that identify source physical registers (e.g., mapped to source logical registers) of the instructions corresponding to the rows. The third column is used to store destination physical register identifiers that identify destination physical registers (e.g., mapped to destination logical registers) of the instructions corresponding to the rows. Specific examples of physical register identifiers (PRIDs) are shown (e.g., PRID1 through PRID9), although these are just illustrative examples. To facilitate understanding, the corresponding source and destination general-purpose or logical registers (e.g., RBX and R8-R15), which the physical register identifiers are mapped to, are included in parenthesis. These general-purpose or other logical registers may optionally not be stored or included in the execution elimination structure.

To further illustrate certain concepts, a brief description will be provided of how the instructions of the loop 100 may be used in the method 320 to train or populate the execution elimination structure 410 to have the state shown in **FIG. 4****.** Referring to block 321 of **FIG. 3****,** the first instruction RBX=LOAD(RAX) may be the next instruction to commit and may be examined. At block 322, it may be determined that the first instruction is a load instruction for which a load value was predicted, so the method may advance to block 323. At block 323, the execution elimination structure may be updated to include the first instruction. For example, as shown in **FIG. 4****,** the instruction pointer A of the first instruction may be stored in the first column of the second row, the predicted load value (e.g., two) may be stored in the second column of the second row, and a first physical register identifier (PRID1) identifying a first physical register (e.g., mapped to the destination general-purpose register RBX of the first instruction) may be stored in the third column of the second row. By way of example, the first instruction may be converted to a move immediate instruction or operation where the immediate may provide the predicated load value so that the immediate value can be written to the physical register that can be read and consumed by dependents.

Referring to block 321 of **FIG. 3****,** now the second instruction R8=RBX*2 may be the next instruction to commit and may be examined. At block 322, it may be determined that the first instruction is not a load instruction for which a load value was predicted and so the method may advance to block 324. At block 324, it may be determined that the sources of the second instruction are all physical registers identified by physical register identifiers reflected in the execution elimination structure. For example, the second instruction only has a single source general-purpose register RBX, which is mapped to the first physical register identified by PRID1 reflected in third column of the second row of the execution elimination structure. The method may advance to block 323, where the execution elimination structure may be updated to include the second instruction. For example, as shown in **FIG. 4****,** the instruction pointer A+4 of the second instruction may be stored in the first column of the third row, the first physical register identifier (PRID1) identifying the first physical register (e.g., mapped to the source general-purpose register RBX of the second instruction) may be stored in the second column of the third row, and a second physical register identifier (PRID2) identifying a second physical register (e.g., mapped to the destination general-purpose register R8 of the second instruction) may be stored in the third column of the third row.

Referring to block 321 of **FIG. 3****,** now the third instruction R9=R8*3 may be the next instruction to commit and may be examined. At block 322, it may be determined that the first instruction is not a load instruction for which a load value was predicted and so the method may advance to block 324. At block 324, it may be determined that the sources of the second instruction are all physical registers identified by physical register identifiers reflected in the execution elimination structure. For example, the third instruction only has a single source general-purpose register R8, which is mapped to the second physical register identified by PRID2 reflected in third column of the third row of the execution elimination structure. The method may advance to block 323, where the execution elimination structure may be updated to include the third instruction. For example, as shown in **FIG. 4****,** the instruction pointer A+8 of the third instruction may be stored in the first column of the fourth row, the second physical register identifier (PRID2) identifying the second physical register (e.g., mapped to the source general-purpose register R8 of the third instruction) may be stored in the second column of the fourth row, and a third physical register identifier (PRID3) identifying a third physical register (e.g., mapped to the destination general-purpose register R9 of the third instruction) may be stored in the third column of the fourth row. A similar process may be repeated for each of the fourth through nineth instructions of the loop to train or populate the execution elimination structure with the state shown in **FIG. 4****.**

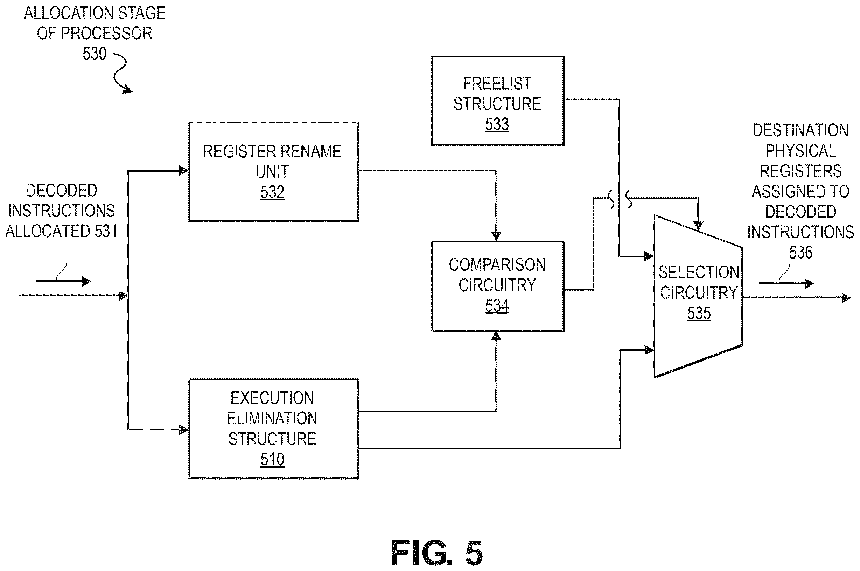

**FIG. 5** is a block diagram of an embodiment of an allocation stage 530 (e.g., allocation circuitry) of a processor. The allocation stage includes a register rename unit 532, an execution elimination structure 510, a comparison circuitry 534, a freelist structure 533, and a selection circuitry 535.

Micro-operations, micro-instructions, or other decoded instructions 531 that are ready for allocation are input to the allocation stage. These decoded instructions are used to check both the register rename unit and the execution elimination structure. The comparison circuit is coupled with outputs of both the register rename unit and the execution elimination structure. The selection circuitry has inputs coupled with outputs of both the freelist structure and the execution elimination structure. The output of the comparison circuitry is coupled as a control input to the selection circuitry. The comparison circuitry may compare the outputs of the register rename unit and the execution elimination structure to see if they are equal or otherwise match (e.g., the renamed sources match with renamed sources from the execution elimination table). If the comparison circuitry determines that the outputs of the register rename unit and the execution elimination structure match then it may control the selection circuitry to select the output of the execution elimination structure as a destination physical register 536 assigned to the decoded instruction. The destination physical register assignment output from the freelist structure may not be used. In such cases, the execution of the decoded instruction may also be eliminated or elided. Otherwise, if the comparison circuitry determines that the values do not match, then the selection circuitry may select the destination physical register output from the freelist structure as the destination physical register 536 assigned to the decoded instruction.

The execution elimination structure 510 may be similar to or the same as those described elsewhere herein (e.g., the execution elimination structure 210 and/or the execution elimination structure 410). The execution elimination structure has entries that are indexed by instruction pointers. The instruction pointers of the decoded instructions being allocated may be used to look up the corresponding entries in the execution elimination structure before being renamed by the register rename unit. The entries store information about the previously renamed source and destination physical registers of the corresponding instructions. Each instruction having an entry in the execution elimination table includes a destination physical register identifier that identifies a destination physical register. When the decoded instructions are allocated, they may be assigned the identified destination physical registers from the entries indexed by the instruction pointers. The destination physical registers of the instructions reflected in the execution elimination structure may be held and not reclaimed. The previously calculated results of the instructions may still be stored or preserved in these destination physical registers. The decoded instructions may be marked for execution elimination by just pointing the destination physical registers of the instruction to the destination physical register used to store or preserve the previously calculated results. This may allow eliminating or eliding the execution of the decoded instructions, which may help to improve performance and/or reduce power consumption, as previously described. By way of example, performance monitoring may be used to count or otherwise determine a number of instructions executed which may be less than a number of instructions counted or otherwise determined to be decoded and/or a number of instructions counted or otherwise determined to be issued, and so on.

Consider as an example, a subsequent iteration of the loop 100 following a training iteration of the loop used to train or populate the execution elimination structure 410 of **FIG. 4****.** During this subsequent iteration, when decoded instructions for each of the second through nineth instructions are allocated, they should hit in the execution elimination structure. This may start with the first instruction RBX=LOAD(RAX). The immediate value of the MOV micro-operation at instruction pointer value A will match with the immediate value stored in the execution elimination table for instruction pointer value A. So, the output of this move is going to be unchanged from what was observed during training. The destination physical register of this move will be the first physical register identified by PRID1. The register alias table will map RBX to PRID1.

Next, the second instruction at instruction pointer A+4 may get allocated. Its source is RBX. This source RBX will be renamed to PRID1, since the first instruction used PRID1 for its destination RBX. The mapping of RBX stored in VET table is also PRF1. Since the renamed sources match between the execution elimination table and the second instruction getting allocated, it is guaranteed that the destination physical register identified in the execution elimination structure and the output will be unchanged. Thus, the second instruction may be marked for elimination by pointing its destination to PRID2. IP A+4 is assigned a destination of PRID2 and RAT will map R8 to PRID2. A similar process may be repeated for each of the third through nineth instructions of the loop.

One thing that should be checked is the continued correctness of the constant load value prediction (e.g., for the first instruction in the loop). For example, on every iteration, the constant load value predicted load (e.g., the first instruction in the loop 100) may be executed to load a value from memory to verify that the actual value loaded remains the same as the constant load value predicted value. The processor may include circuitry to compare a value loaded by executing the load instruction during an iteration with the value predicted for the load instruction or else this may optionally be done in software. If the actual value and the predicted value remain the same, then the execution elimination described above is valid. Alternatively, if there has been an intermediate store, write, or snoop from another core, that changes or modifies the value, then this may be detected. In such cases, the incorrect values may be discarded (e.g., purged from the pipeline and cleared from or marked invalid in the physical registers) and the instructions may be re-executed to generate correct results.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are suitable.

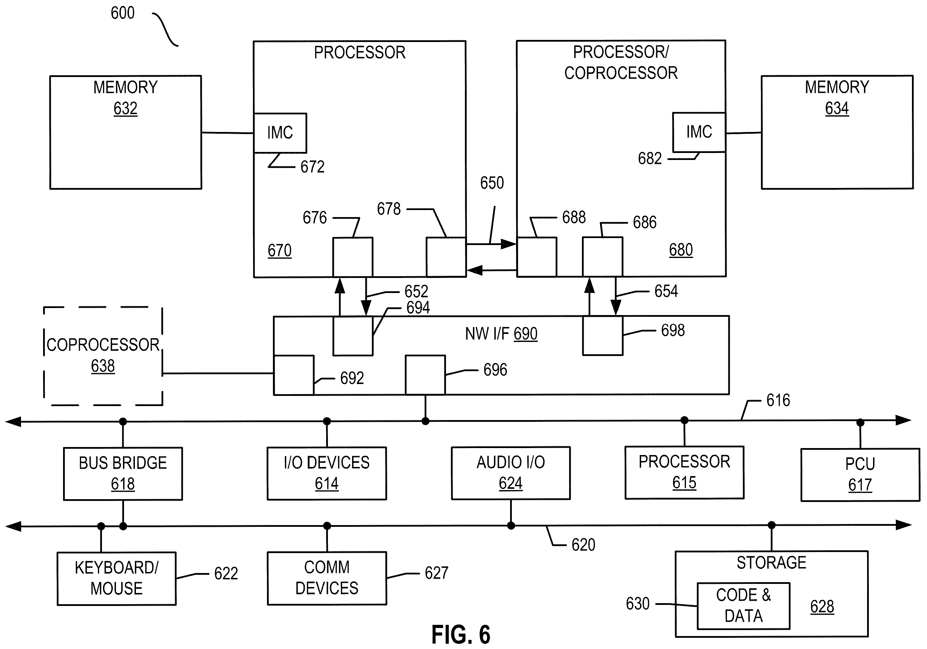

**FIG. 6** illustrates an example computing system. Multiprocessor system 600 is an interfaced system and includes a plurality of processors or cores including a first processor 670 and a second processor 680 coupled via an interface 650 such as a point-to-point (P-P) interconnect, a fabric, and/or bus. In some examples, the first processor 670 and the second processor 680 are homogeneous. In some examples, the first processor 670 and the second processor 680 are heterogenous. Though the example system 600 is shown to have two processors, the system may have three or more processors, or may be a single processor system. In some examples, the computing system is a system on a chip (SoC).

Processors 670 and 680 are shown including integrated memory controller (IMC) circuitry 672 and 682, respectively. Processor 670 also includes interface circuits 676 and 678; similarly, second processor 680 includes interface circuits 686 and 688. Processors 670, 680 may exchange information via the interface 650 using interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a network interface (NW I/F) 690 via individual interfaces 652, 654 using interface circuits 676, 694, 686, 698. The network interface 690 (e.g., one or more of an interconnect, bus, and/or fabric, and in some examples is a chipset) may optionally exchange information with a coprocessor 638 via an interface circuit 692. In some examples, the coprocessor 638 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 670, 680 or outside of both processors, yet connected with the processors via an interface such as P-P interconnect, such that either or both processors' local cache information may be stored in the shared cache if a processor is placed into a low power mode.

Network interface 690 may be coupled to a first interface 616 via interface circuit 696. In some examples, the first interface 616 may be an interface such as a Peripheral Component Interconnect (PCI) interconnect, a PCI Express interconnect or another I/O interconnect. In some examples, the first interface 616 is coupled to a power control unit (PCU) 617, which may include circuitry, software, and/or firmware to perform power management operations regarding the processors 670, 680 and/or co-processor 638. PCU 617 provides control information to a voltage regulator (not shown) to cause the voltage regulator to generate the appropriate regulated voltage. PCU 617 also provides control information to control the operating voltage generated. In various examples, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller (dedicated or general-purpose) or other control logic configured to execute its own dedicated power management code, sometimes referred to as P-code. In yet other examples, power management operations to be performed by PCU 617 may be implemented externally to a processor, such as by way of a separate power management integrated circuit (PMIC) or another component external to the processor. In yet other examples, power management operations to be performed by PCU 617 may be implemented within BIOS or other system software.

Various I/O devices 614 may be coupled to first interface 616, along with a bus bridge 618 which couples first interface 616 to a second interface 620. In some examples, one or more additional processor(s) 615, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 616. In some examples, the second interface 620 may be a low pin count (LPC) interface. Various devices may be coupled to second interface 620 including, for example, a keyboard and/or mouse 622, communication devices 627 and storage circuitry 628. Storage circuitry 628 may be one or more non-transitory machine-readable storage media as described below, such as a disk drive or other mass storage device which may include instructions/code and data 630 and may implement the storage 'ISAB03 in some examples. Further, an audio I/O 624 may be coupled to second interface 620. Note that other architectures than the point-to-point architecture described above are possible. For example, instead of the point-to-point architecture, a system such as multiprocessor system 600 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

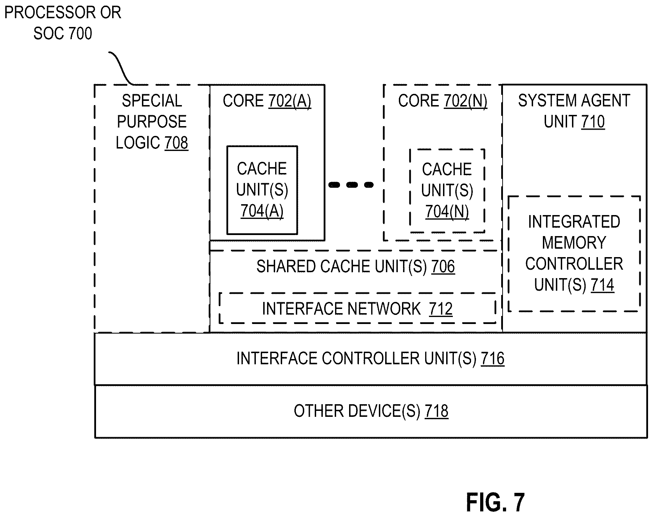

**FIG. 7** illustrates a block diagram of an example processor and/or SoC 700 that may have one or more cores and an integrated memory controller. The solid lined boxes illustrate a processor 700 with a single core 702(A), system agent unit circuitry 710, and a set of one or more interface controller unit(s) circuitry 716, while the optional addition of the dashed lined boxes illustrates an alternative processor 700 with multiple cores 702(A)-(N), a set of one or more integrated memory controller unit(s) circuitry 714 in the system agent unit circuitry 710, and special purpose logic 708, as well as a set of one or more interface controller units circuitry 716. Note that the processor 700 may be one of the processors 670 or 680, or co-processor 638 or 615 of **FIG. 6****.**

Thus, different implementations of the processor 700 may include: 1) a CPU with the special purpose logic 708 being integrated graphics and/or scientific (throughput) logic (which may include one or more cores, not shown), and the cores 702(A)-(N) being one or more general purpose cores (e.g., general purpose in-order cores, general purpose out-of-order cores, or a combination of the two); 2) a coprocessor with the cores 702(A)-(N) being a large number of special purpose cores intended primarily for graphics and/or scientific (throughput); and 3) a coprocessor with the cores 702(A)-(N) being a large number of general purpose in-order cores. Thus, the processor 700 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 700 may be a part of and/or may be implemented on one or more substrates using any of several process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 704(A)-(N) within the cores 702(A)-(N), a set of one or more shared cache unit(s) circuitry 706, and external memory (not shown) coupled to the set of integrated memory controller unit(s) circuitry 714. The set of one or more shared cache unit(s) circuitry 706 may include one or more mid-level caches, such as level 2 (L2), level 3 (L3), level 4 (L4), or other levels of cache, such as a last level cache (LLC), and/or combinations thereof. While in some examples interface network circuitry 712 (e.g., a ring interconnect) interfaces the special purpose logic 708 (e.g., integrated graphics logic), the set of shared cache unit(s) circuitry 706, and the system agent unit circuitry 710, alternative examples use any number of well-known techniques for interfacing such units. In some examples, coherency is maintained between one or more of the shared cache unit(s) circuitry 706 and cores 702(A)-(N). In some examples, interface controller units circuitry 716 couple the cores 702 to one or more other devices 718 such as one or more I/O devices, storage, one or more communication devices (e.g., wireless networking, wired networking, etc.), etc.

In some examples, one or more of the cores 702(A)-(N) are capable of multi-threading. The system agent unit circuitry 710 includes those components coordinating and operating cores 702(A)-(N). The system agent unit circuitry 710 may include, for example, power control unit (PCU) circuitry and/or display unit circuitry (not shown). The PCU may be or may include logic and components needed for regulating the power state of the cores 702(A)-(N) and/or the special purpose logic 708 (e.g., integrated graphics logic). The display unit circuitry is for driving one or more externally connected displays.

The cores 702(A)-(N) may be homogenous in terms of instruction set architecture (ISA). Alternatively, the cores 702(A)-(N) may be heterogeneous in terms of ISA; that is, a subset of the cores 702(A)-(N) may be capable of executing an ISA, while other cores may be capable of executing only a subset of that ISA or another ISA.

### Example Core Architectures - In-order and out-of-order core block diagram.

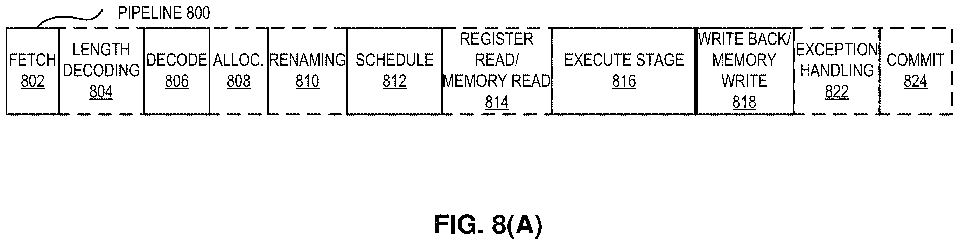

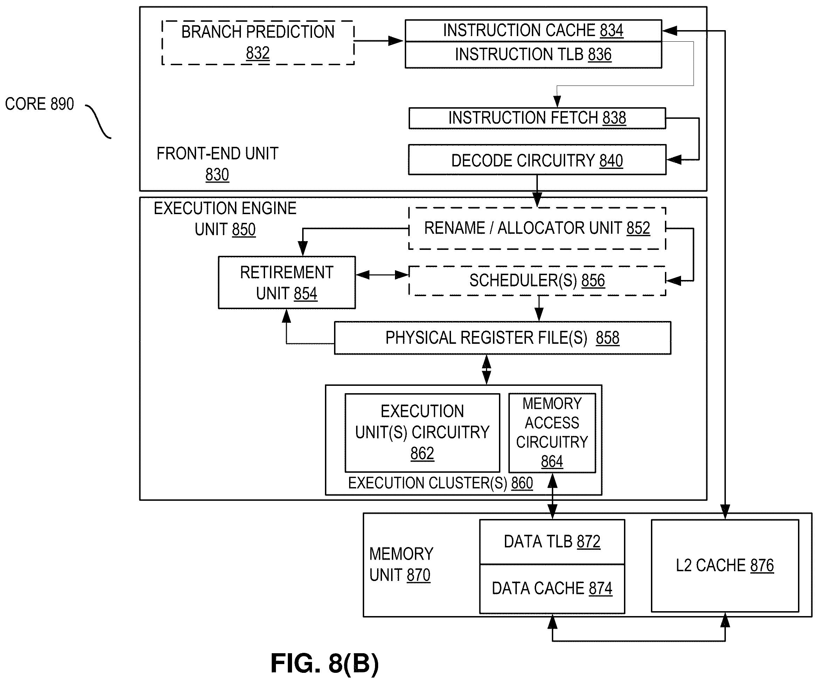

**FIG. 8(A)** is a block diagram illustrating both an example in-order pipeline and an example register renaming, out-of-order issue/execution pipeline according to examples. **FIG. 8(B)** is a block diagram illustrating both an example in-order architecture core and an example register renaming, out-of-order issue/execution architecture core to be included in a processor according to examples. The solid lined boxes in **FIGS. 8(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 8(A)****,** a processor pipeline 800 includes a fetch stage 802, an optional length decoding stage 804, a decode stage 806, an optional allocation (Alloc) stage 808, an optional renaming stage 810, a schedule (also known as a dispatch or issue) stage 812, an optional register read/memory read stage 814, an execute stage 816, a write back/memory write stage 818, an optional exception handling stage 822, and an optional commit stage 824. One or more operations can be performed in each of these processor pipeline stages. For example, during the fetch stage 802, one or more instructions are fetched from instruction memory, and during the decode stage 806, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 806 and the register read/memory read stage 814 may be combined into one pipeline stage. In one example, during the execute stage 816, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 8(B)** may implement the pipeline 800 as follows: 1) the instruction fetch circuitry 838 performs the fetch and length decoding stages 802 and 804; 2) the decode circuitry 840 performs the decode stage 806; 3) the rename/allocator unit circuitry 852 performs the allocation stage 808 and renaming stage 810; 4) the scheduler(s) circuitry 856 performs the schedule stage 812; 5) the physical register file(s) circuitry 858 and the memory unit circuitry 870 perform the register read/memory read stage 814; the execution cluster(s) 860 perform the execute stage 816; 6) the memory unit circuitry 870 and the physical register file(s) circuitry 858 perform the write back/memory write stage 818; 7) various circuitry may be involved in the exception handling stage 822; and 8) the retirement unit circuitry 854 and the physical register file(s) circuitry 858 perform the commit stage 824.

**FIG. 8(B)** shows a processor core 890 including front-end unit circuitry 830 coupled to execution engine unit circuitry 850, and both are coupled to memory unit circuitry 870. The core 890 may be a reduced instruction set architecture computing (RISC) core, a complex instruction set architecture computing (CISC) core, a very long instruction word (VLIW) core, or a hybrid or alternative core type. As yet another option, the core 890 may be a special-purpose core, such as, for example, a network or communication core, compression engine, coprocessor core, general purpose computing graphics processing unit (GPGPU) core, graphics core, or the like.

The front-end unit circuitry 830 may include branch prediction circuitry 832 coupled to instruction cache circuitry 834, which is coupled to an instruction translation lookaside buffer (TLB) 836, which is coupled to instruction fetch circuitry 838, which is coupled to decode circuitry 840. In one example, the instruction cache circuitry 834 is included in the memory unit circuitry 870 rather than the front-end circuitry 830. The decode circuitry 840 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 840 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 840 may be implemented using various mechanisms. Examples of suitable mechanisms include, but are not limited to, look-up tables, hardware implementations, programmable logic arrays (PLAs), microcode read only memories (ROMs), etc. In one example, the core 890 includes a microcode ROM (not shown) or other medium that stores microcode for certain macroinstructions (e.g., in decode circuitry 840 or otherwise within the front-end circuitry 830). In one example, the decode circuitry 840 includes a micro-operation (micro-op) or operation cache (not shown) to hold/cache decoded operations, micro-tags, or micro-operations generated during the decode or other stages of the processor pipeline 800. The decode circuitry 840 may be coupled to rename/allocator unit circuitry 852 in the execution engine circuitry 850.

The execution engine circuitry 850 includes the rename/allocator unit circuitry 852 coupled to retirement unit circuitry 854 and a set of one or more scheduler(s) circuitry 856. The scheduler(s) circuitry 856 represents any number of different schedulers, including reservations stations, central instruction window, etc. In some examples, the scheduler(s) circuitry 856 can include arithmetic logic unit (ALU) scheduler/scheduling circuitry, ALU queues, address generation unit (AGU) scheduler/scheduling circuitry, AGU queues, etc. The scheduler(s) circuitry 856 is coupled to the physical register file(s) circuitry 858. Each of the physical register file(s) circuitry 858 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 858 includes vector registers unit circuitry, writemask registers unit circuitry, and scalar register unit circuitry. These register units may provide architectural vector registers, vector mask registers, general-purpose registers, etc. The physical register file(s) circuitry 858 is coupled to the retirement unit circuitry 854 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 854 and the physical register file(s) circuitry 858 are coupled to the execution cluster(s) 860. The execution cluster(s) 860 includes a set of one or more execution unit(s) circuitry 862 and a set of one or more memory access circuitry 864. The execution unit(s) circuitry 862 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include several execution units or execution unit circuitry dedicated to specific functions or sets of functions, other examples may include only one execution unit circuitry or multiple execution units/execution unit circuitry that all perform all functions. The scheduler(s) circuitry 856, physical register file(s) circuitry 858, and execution cluster(s) 860 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 864). It should also be understood that where separate pipelines are used, one or more of these pipelines may be out-of-order issue/execution and the rest in-order.

In some examples, the execution engine unit circuitry 850 may perform load store unit (LSU) address/data pipelining to an Advanced Microcontroller Bus (AMB) interface (not shown), and address phase and writeback, data phase load, store, and branches.

The set of memory access circuitry 864 is coupled to the memory unit circuitry 870, which includes data TLB circuitry 872 coupled to data cache circuitry 874 coupled to level 2 (L2) cache circuitry 876. In one example, the memory access circuitry 864 may include load unit circuitry, store address unit circuitry, and store data unit circuitry, each of which is coupled to the data TLB circuitry 872 in the memory unit circuitry 870. The instruction cache circuitry 834 is further coupled to the level 2 (L2) cache circuitry 876 in the memory unit circuitry 870. In one example, the instruction cache 834 and the data cache 874 are combined into a single instruction and data cache (not shown) in L2 cache circuitry 876, level 3 (L3) cache circuitry (not shown), and/or main memory. The L2 cache circuitry 876 is coupled to one or more other levels of cache and eventually to a main memory.

The core 890 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 890 includes logic to support a packed data instruction set architecture extension (e.g., AVX1, AVX2), thereby allowing the operations used by many multimedia applications to be performed using packed data.

### Example Execution Unit(s) Circuitry.

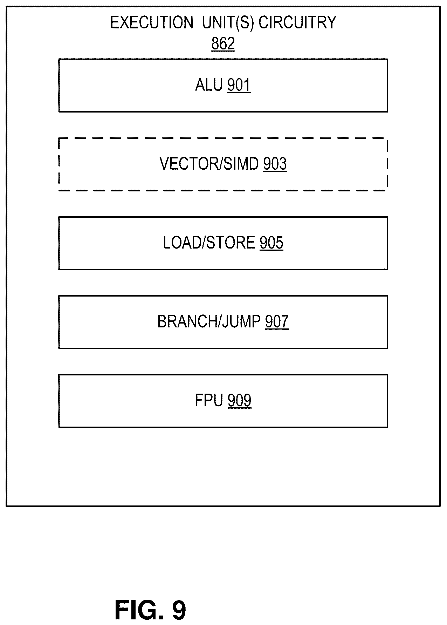

**FIG. 9** illustrates examples of execution unit(s) circuitry, such as execution unit(s) circuitry 862 of **FIG. 8(B)****.** As illustrated, execution unit(s) circuity 862 may include one or more ALU circuits 901, optional vector/single instruction multiple data (SIMD) circuits 903, load/store circuits 905, branch/jump circuits 907, and/or Floating-point unit (FPU) circuits 909. ALU circuits 901 perform integer arithmetic and/or Boolean operations. Vector/SIMD circuits 903 perform vector/SIMD operations on packed data (such as SIMD/vector registers). Load/store circuits 905 execute load and store instructions to load data from memory into registers or store from registers to memory. Load/store circuits 905 may also generate addresses. Branch/jump circuits 907 cause a branch or jump to a memory address depending on the instruction. FPU circuits 909 perform floating-point arithmetic. The width of the execution unit(s) circuitry 862 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

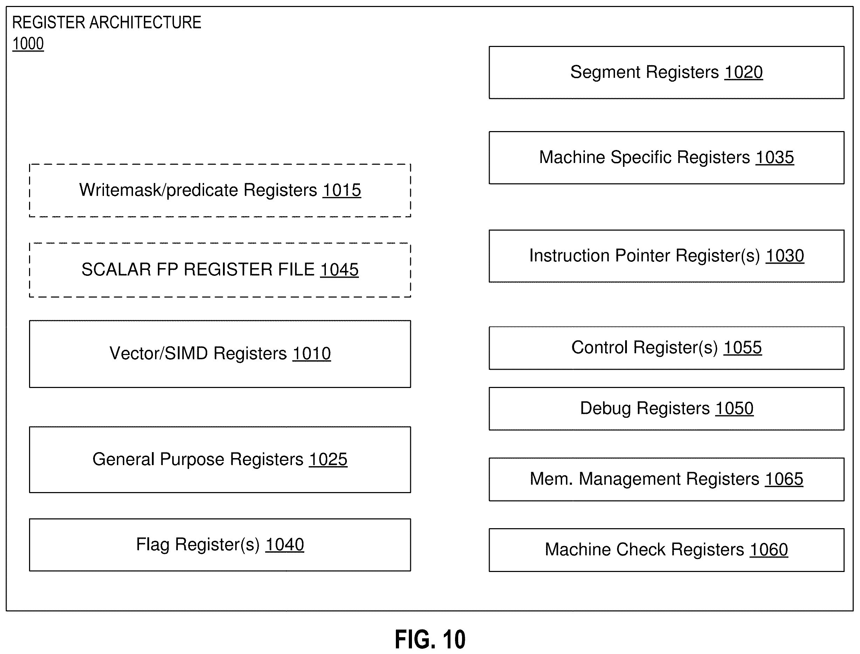

**FIG. 10** is a block diagram of a register architecture 1000 according to some examples. As illustrated, the register architecture 1000 includes vector/SIMD registers 1010 that vary from 128-bit to 1,024 bits width. In some examples, the vector/SIMD registers 1010 are physically 512-bits and, depending upon the mapping, only some of the lower bits are used. For example, in some examples, the vector/SIMD registers 1010 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1000 includes writemask/predicate registers 1015. For example, in some examples, there are 8 writemask/predicate registers (sometimes called k0 through k7) that are each 16-bit, 32-bit, 64-bit, or 128-bit in size. Writemask/predicate registers 1015 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1015 corresponds to a data element position of the destination. In other examples, the writemask/predicate registers 1015 are scalable and consists of a set number of enable bits for a given vector element (e.g., 8 enable bits per 64-bit vector element).

The register architecture 1000 includes a plurality of general-purpose registers 1025. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1000 includes scalar floating-point (FP) register file 1045 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1040 (e.g., EFLAGS, RFLAGS, etc.) store status and control information for arithmetic, compare, and system operations. For example, the one or more flag registers 1040 may store condition code information such as carry, parity, auxiliary carry, zero, sign, and overflow. In some examples, the one or more flag registers 1040 are called program status and control registers.

Segment registers 1020 contain segment points for use in accessing memory. In some examples, these registers are referenced by the names CS, DS, SS, ES, FS, and GS.

Machine specific registers (MSRs) 1035 control and report on processor performance. Most MSRs 1035 handle system-related functions and are not accessible to an application program. Machine check registers 1060 consist of control, status, and error reporting MSRs that are used to detect and report on hardware errors.

One or more instruction pointer register(s) 1030 store an instruction pointer value. Control register(s) 1055 (e.g., CR0-CR4) determine the operating mode of a processor (e.g., processor 670, 680, 638, 615, and/or 700) and the characteristics of a currently executing task. Debug registers 1050 control and allow for the monitoring of a processor or core's debugging operations.

Memory (mem) management registers 1065 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1000 may, for example, be used in register file / memory 'ISAB08, or physical register file(s) circuitry 8 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

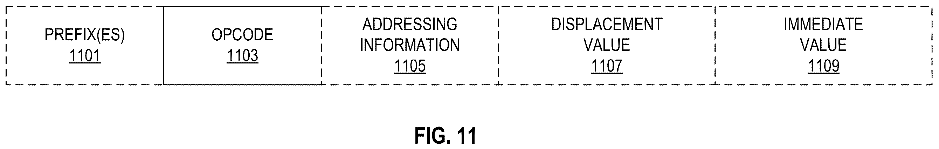

**FIG. 11** illustrates examples of an instruction format. As illustrated, an instruction may include multiple components including, but not limited to, one or more fields for: one or more prefixes 1101, an opcode 1103, addressing information 1105 (e.g., register identifiers, memory addressing information, etc.), a displacement value 1107, and/or an immediate value 1109. Note that some instructions utilize some or all the fields of the format whereas others may only use the field for the opcode 1103. In some examples, the order illustrated is the order in which these fields are to be encoded, however, it should be appreciated that in other examples these fields may be encoded in a different order, combined, etc.

The prefix(es) field(s) 1101, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1103 is used to at least partially define the operation to be performed upon a decoding of the instruction. In some examples, a primary opcode encoded in the opcode field 1103 is one, two, or three bytes in length. In other examples, a primary opcode can be a different length. An additional 3-bit opcode field is sometimes encoded in another field.

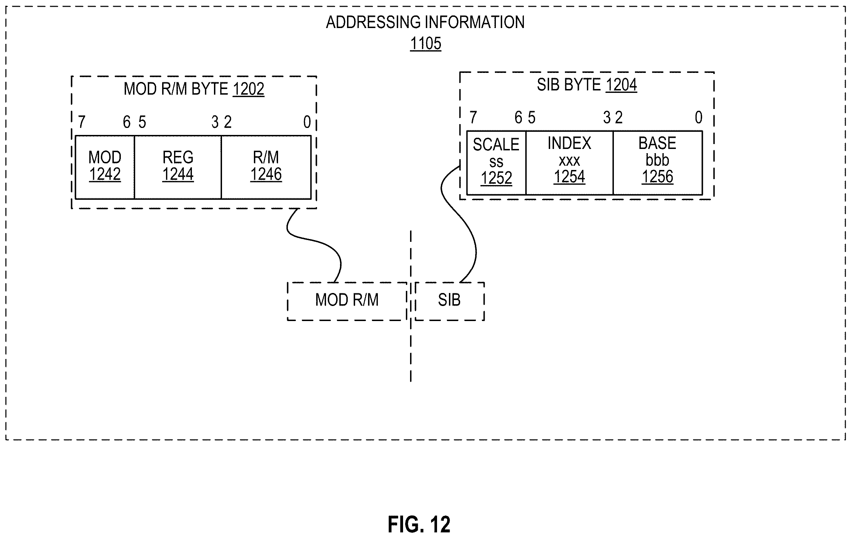

The addressing information field 1105 is used to address one or more operands of the instruction, such as a location in memory or one or more registers. **FIG. 12** illustrates examples of the addressing information field 1105. In this illustration, an optional MOD R/M byte 1202 and an optional Scale, Index, Base (SIB) byte 1204 are shown. The MOD R/M byte 1202 and the SIB byte 1204 are used to encode up to two operands of an instruction, each of which is a direct register or effective memory address. Note that both fields are optional in that not all instructions include one or more of these fields. The MOD R/M byte 1202 includes a MOD field 1242, a register (reg) field 1244, and R/M field 1246.

The content of the MOD field 1242 distinguishes between memory access and non-memory access modes. In some examples, when the MOD field 1242 has a binary value of 11 (11b), a register-direct addressing mode is utilized, and otherwise a register-indirect addressing mode is used.

The register field 1244 may encode either the destination register operand or a source register operand or may encode an opcode extension and not be used to encode any instruction operand. The content of register field 1244, directly or through address generation, specifies the locations of a source or destination operand (either in a register or in memory). In some examples, the register field 1244 is supplemented with an additional bit from a prefix (e.g., prefix 1101) to allow for greater addressing.

The R/M field 1246 may be used to encode an instruction operand that references a memory address or may be used to encode either the destination register operand or a source register operand. Note the R/M field 1246 may be combined with the MOD field 1242 to dictate an addressing mode in some examples.

The SIB byte 1204 includes a scale field 1252, an index field 1254, and a base field 1256 to be used in the generation of an address. The scale field 1252 indicates a scaling factor. The index field 1254 specifies an index register to use. In some examples, the index field 1254 is supplemented with an additional bit from a prefix (e.g., prefix 1101) to allow for greater addressing. The base field 1256 specifies a base register to use. In some examples, the base field 1256 is supplemented with an additional bit from a prefix (e.g., prefix 1101) to allow for greater addressing. In practice, the content of the scale field 1252 allows for the scaling of the content of the index field 1254 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1107 provides this value. Additionally, in some examples, a displacement factor usage is encoded in the MOD field of the addressing information field 1105 that indicates a compressed displacement scheme for which a displacement value is calculated and stored in the displacement field 1107.

In some examples, the immediate value field 1109 specifies an immediate value for the instruction. An immediate value may be encoded as a 1-byte value, a 2-byte value, a 4-byte value, etc.

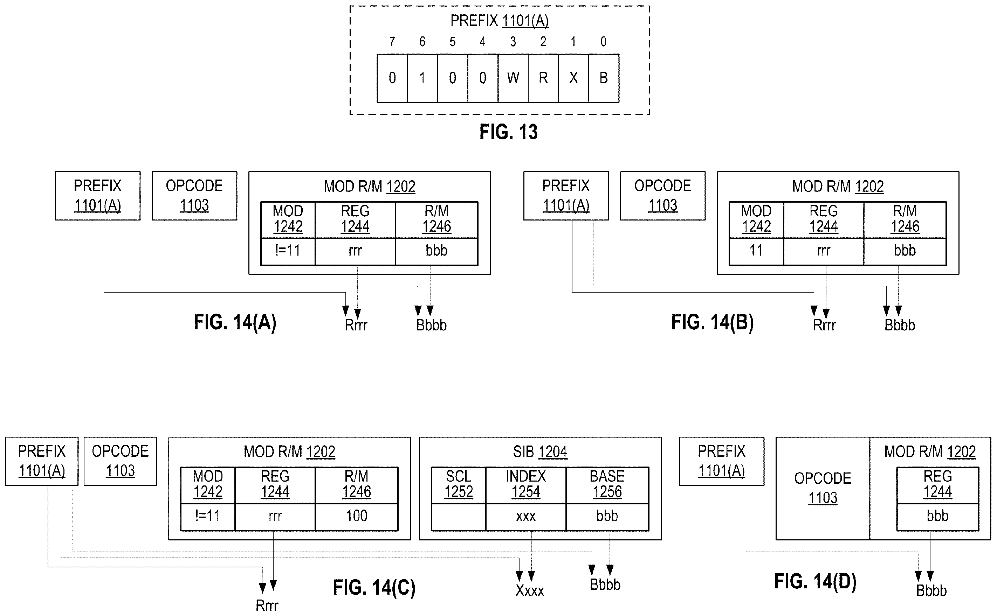

**FIG. 13** illustrates examples of a first prefix 1101(A). In some examples, the first prefix 1101(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1101(A) may specify up to three registers using 3-bit fields depending on the format: 1) using the reg field 1244 and the R/M field 1246 of the MOD R/M byte 1202; 2) using the MOD R/M byte 1202 with the SIB byte 1204 including using the reg field 1244 and the base field 1256 and index field 1254; or 3) using the register field of an opcode.

In the first prefix 1101(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1244 and MOD R/M R/M field 1246 alone can each only address 8 registers.

In the first prefix 1101(A), bit position 2 (R) may be an extension of the MOD R/M reg field 1244 and may be used to modify the MOD R/M reg field 1244 when that field encodes a general-purpose register, a 64-bit packed data register (e.g., a SSE register), or a control or debug register. R is ignored when MOD R/M byte 1202 specifies other registers or defines an extended opcode.

Bit position 1 (X) may modify the SIB byte index field 1254.

Bit position 0 (B) may modify the base in the MOD R/M R/M field 1246 or the SIB byte base field 1256; or it may modify the opcode register field used for accessing general purpose registers (e.g., general purpose registers 1025).

**FIGS. 14(A)****-(D)** illustrate examples of how the R, X, and B fields of the first prefix 1101(A) are used. **FIG. 14(A)** illustrates R and B from the first prefix 1101(A) being used to extend the reg field 1244 and R/M field 1246 of the MOD R/M byte 1202 when the SIB byte 12 04 is not used for memory addressing. **FIG. 14(B)** illustrates R and B from the first prefix 1101(A) being used to extend the reg field 1244 and R/M field 1246 of the MOD R/M byte 1202 when the SIB byte 12 04 is not used (register-register addressing). **FIG. 14(C)** illustrates R, X, and B from the first prefix 1101(A) being used to extend the reg field 1244 of the MOD R/M byte 1202 and the index field 1254 and base field 1256 when the SIB byte 12 04 being used for memory addressing. **FIG. 14(D)** illustrates B from the first prefix 1101(A) being used to extend the reg field 1244 of the MOD R/M byte 1202 when a register is encoded in the opcode 1103.

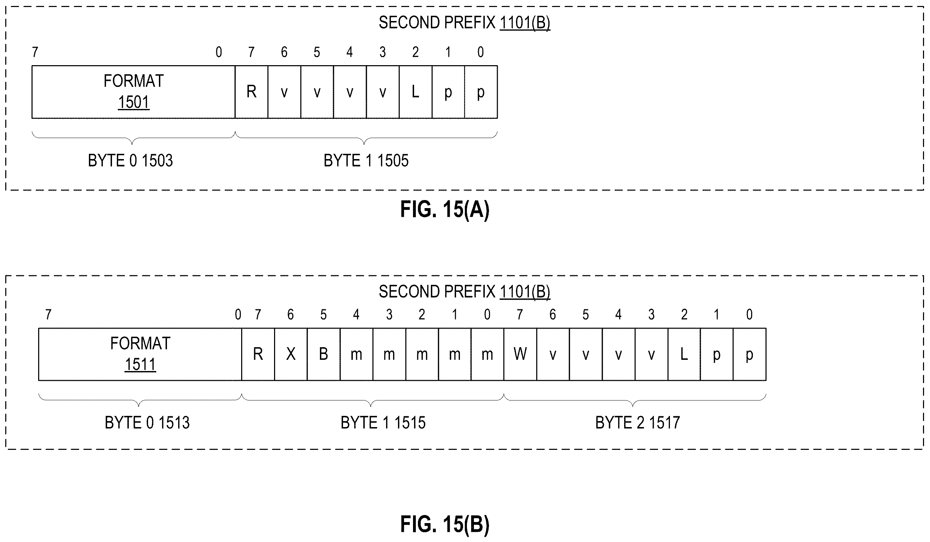

**FIGS. 15(A)****-(B)** illustrate examples of a second prefix 1101(B). In some examples, the second prefix 1101(B) is an example of a VEX prefix. The second prefix 1101(B) encoding allows instructions to have more than two operands, and allows SIMD vector registers (e.g., vector/SIMD registers 1010) to be longer than 64-bits (e.g., 128-bit and 256-bit). The use of the second prefix 1101(B) provides for three-operand (or more) syntax. For example, previous two-operand instructions performed operations such as A = A + B, which overwrites a source operand. The use of the second prefix 1101(B) enables operands to perform nondestructive operations such as A = B + C.

In some examples, the second prefix 1101(B) comes in two forms - a two-byte form and a three-byte form. The two-byte second prefix 1101(B) is used mainly for 128-bit, scalar, and some 256-bit instructions; while the three-byte second prefix 1101(B) provides a compact replacement of the first prefix 1101(A) and 3-byte opcode instructions.

**FIG. 15(A)** illustrates examples of a two-byte form of the second prefix 1101(B). In one example, a format field 1501 (byte 0 1503) contains the value C5H. In one example, byte 1 1505 includes an "R" value in bit[7]. This value is the complement of the "R" value of the first prefix 1101(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1246 to encode the instruction operand that references a memory address or encode either the destination register operand or a source register operand.

Instructions that use this prefix may use the MOD R/M reg field 1244 to encode either the destination register operand or a source register operand, or to be treated as an opcode extension and not used to encode any instruction operand.

For instruction syntax that supports four operands, vvvv, the MOD R/M R/M field 1246 and the MOD R/M reg field 1244 encode three of the four operands. Bits[7:4] of the immediate value field 1109 are then used to encode the third source register operand.

**FIG. 15(B)** illustrates examples of a three-byte form of the second prefix 1101(B). In one example, the format field 1511 (byte 0 1513) contains the value C4H. Byte 1 1515 includes in bits[7:5] "R," "X," and "B" which are the complements of the same values of the first prefix 1101(A). Bits[4:0] of byte 1 1515 (shown as mmmmm) include content to encode, as needed, one or more implied leading opcode bytes. For example, 00001 implies a 0FH leading opcode, 00010 implies a 0F38H leading opcode, 00011 implies a 0F3AH leading opcode, etc.

Bit[7] of byte 2 1517 is used like W of the first prefix 1101(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1246 to encode the instruction operand that references a memory address or encode either the destination register operand or a source register operand.

Instructions that use this prefix may use the MOD R/M reg field 1244 to encode either the destination register operand or a source register operand, or to be treated as an opcode extension and not used to encode any instruction operand.

For instruction syntax that supports four operands, vvvv, the MOD R/M R/M field 1246, and the MOD R/M reg field 1244 encode three of the four operands. Bits[7:4] of the immediate value field 1109 are then used to encode the third source register operand.

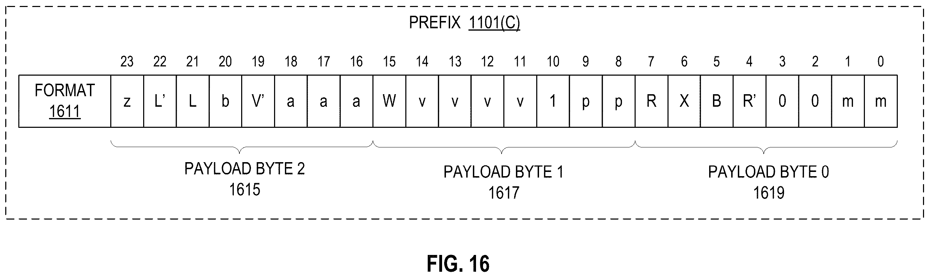

**FIG. 16** illustrates examples of a third prefix 1101(C). In some examples, the third prefix 1101(C) is an example of an EVEX prefix. The third prefix 1101(C) is a four-byte prefix.

The third prefix 1101(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 10****)** or predication utilize this prefix. Opmask register allows for conditional processing or selection control. Opmask instructions, whose source/destination operands are opmask registers and treat the content of an opmask register as a single value, are encoded using the second prefix 1101(B).

The third prefix 1101(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1101(C) is a format field 1611 that has a value, in one example, of 62H. Subsequent bytes are referred to as payload bytes 1615-1619 and collectively form a 24-bit value of P[23:0] providing specific capability in the form of one or more fields (detailed herein).

In some examples, P[1:0] of payload byte 1619 are identical to the low two mm bits. P[3:2] are reserved in some examples. Bit P[4] (R') allows access to the high 16 vector register set when combined with P[7] and the MOD R/M reg field 1244. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1244 and MOD R/M R/M field 1246. P[9:8] provides opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is like W of the first prefix 1101(A) and second prefix 1111(B) and may serve as an opcode extension bit or operand size promotion.

P[18:16] specify the index of a register in the opmask (writemask) registers (e.g., writemask/predicate registers 1015). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1101(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

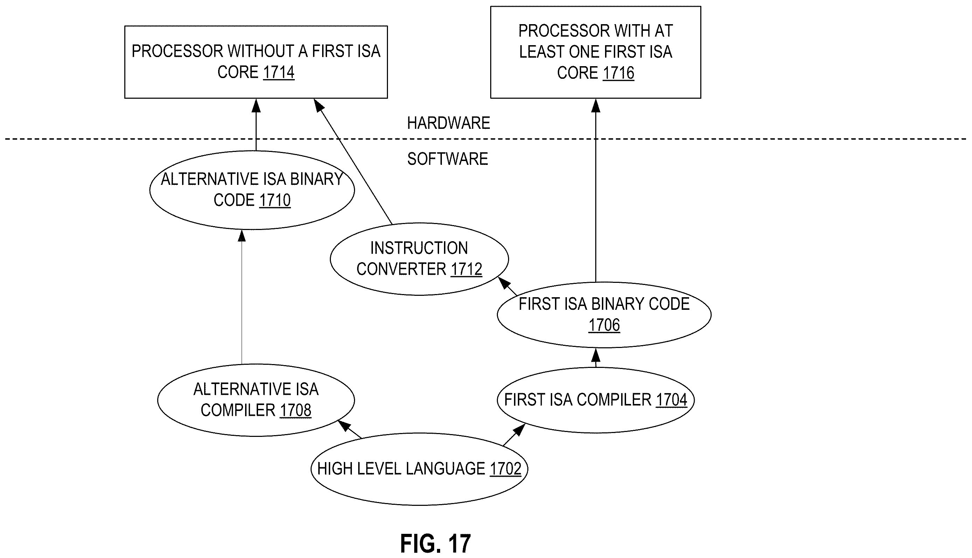

**FIG. 17** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 17** shows a program in a high-level language 1702 may be compiled using a first ISA compiler 1704 to generate first ISA binary code 1706 that may be natively executed by a processor with at least one first ISA core 1716. The processor with at least one first ISA core 1716 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1704 represents a compiler that is operable to generate the first ISA binary code 1706 (e.g., object code) that can, with or without additional linkage processing, be executed on the processor with at least one first ISA core 1716. Similarly, **FIG. 17** shows the program in the high-level language 1702 may be compiled using an alternative ISA compiler 1708 to generate alternative ISA binary code 1710 that may be natively executed by a processor without a first ISA core 1714. The instruction converter 1712 is used to convert the first ISA binary code 1706 into code that may be natively executed by the processor without a first ISA core 1714. This converted code is not necessarily to be the same as the alternative ISA binary code 1710; however, the converted code will accomplish the general operation and be made up of instructions from the alternative ISA. Thus, the instruction converter 1712 represents software, firmware, hardware, or a combination thereof that, through emulation, simulation, or any other process, allows a processor or other electronic device that does not have a first ISA processor or core to execute the first ISA binary code 1706.

Components, features, and details described for any of the processors or other apparatus disclosed herein may optionally apply to any of the methods disclosed herein, which in embodiments may optionally be performed by and/or with such processors. Any of the processors described herein in embodiments may optionally be included in any of the systems disclosed herein. Any of the processors disclosed herein may optionally have any of the microarchitectures shown herein.

References to "one example," "an example," etc., indicate that the example described may include a particular feature, structure, or characteristic, but every example may not necessarily include the particular feature, structure, or characteristic. Moreover, such phrases do not necessarily refer to the same example. Further, when a particular feature, structure, or characteristic is described in connection with an example, it is submitted that it is within the knowledge of one skilled in the art to affect such feature, structure, or characteristic in connection with other examples whether explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, yet still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical, or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

### EXAMPLE EMBODIMENTS

The following examples pertain to further embodiments. Specifics in the examples may be used anywhere in one or more embodiments.

Example 1 is a method including predicting a value that a load instruction of a first iteration of a loop would load and executing a plurality of instructions occurring after the load instruction in the first iteration of the loop to generate a plurality of results. Each of the plurality of results depends only on the value, one or more constant values, values derived therefrom, or any combination thereof. The method also includes producing the plurality of results for the plurality of instructions during each of one or more iterations of the loop after the first iteration without re-executing the plurality of instructions.

Example 2 includes the method of Example 1, further including, storing the plurality of results generated for the first iteration in a plurality of physical registers. Also optionally where producing includes producing the plurality of results from the plurality of physical registers during each of the one or more iterations.

Example 3 includes the method of any one of Examples 1 to 2, where producing includes producing the plurality of results during allocation.

Example 4 includes the method of any one of Examples 1 to 3, further including, during the first iteration of the loop: (1) storing an instruction pointer for the load instruction, the value predicted for the load instruction, and a destination physical register identifier for the load instruction, in an entry of a structure; and storing at least one source physical register identifier and a destination physical register identifier for each of the plurality of instructions in a different corresponding entry of the structure.

Example 5 includes the method of any one of Examples 1 to 4, where storing includes storing the instruction pointer for the load instruction, the value predicted for the load instruction, and the destination physical register identifier for the load instruction, in the entry of the structure when the load instruction is committed.

Example 6 includes the method of any one of Examples 1 to 5, further including storing each of the plurality of results generated for the first iteration in a destination physical register identified by the destination physical register identifier for a corresponding instruction.

Example 7 includes the method of any one of Examples 1 to 6, where producing includes producing each of the plurality of results from the destination physical register identified by the destination physical register identifier for the corresponding instruction.

Example 8 includes the method of any one of Examples 1 to 7, further including, during the first iteration of the loop: (1) indicating an execution elimination hit for the destination physical register identifier for the load instruction; and optionally indicating an execution elimination hit for the destination physical register identifier for each of the plurality of instructions.

Example 9 includes the method of any one of Examples 1 to 8, further including executing the load instruction during the first iteration and each of the one or more iterations.

Example 10 includes the method of any one of Examples 1 to 9, further including discarding the plurality of results produced during a given iteration of the one or more iterations if a value loaded by executing the load instruction during the given iteration differs from the value predicted for the load instruction.

Example 11 is an apparatus including a prediction unit to predict a value that a load instruction of a first iteration of a loop would load and one or more execution units to execute a plurality of instructions occurring after the load instruction in the first iteration of the loop to generate a plurality of results. Each of the plurality of results depends only on the value, one or more constant values, values derived therefrom, or any combination thereof. The apparatus also includes allocation circuitry to produce the plurality of results for the plurality of instructions each of one or more iterations of the loop after the first iteration without re-executing the plurality of instructions.

Example 12 includes the apparatus of Example 11, further including a plurality of physical registers to store the plurality of results generated for the first iteration. Also optionaly where the allocation circuitry is to produce the plurality of results from the plurality of physical registers during each of the one or more iterations.

Example 13 includes the apparatus of any one of Examples 11 to 12, further including a structure having a plurality of entries, where, during the first iteration of the loop: (1) an instruction pointer for the load instruction, the value predicted for the load instruction, and a destination physical register identifier for the load instruction, are to be stored in an entry of the structure, and (2) optionally at least one source physical register identifier and a destination physical register identifier are to be stored in different corresponding entries of the structure for each of the plurality of instructions.

Example 14 includes the apparatus of any one of Examples 11 to 13, further including a commit unit coupled with the structure, the commit unit to commit the load instruction, where the instruction pointer for the load instruction, the value predicted for the load instruction, and the destination physical register identifier for the load instruction, are to be stored in the entry when the load instruction is committed.

Example 15 includes the apparatus of any one of Examples 11 to 14, where the one or more execution units are to execute the load instruction during the first iteration and each of the one or more iterations.

Example 16 includes the apparatus of any one of Examples 11 to 15, further including circuitry to compare a value loaded by executing the load instruction during an iteration with the value predicted for the load instruction.

Example 17 is a system including a processor including a prediction unit to predict a value that a load instruction of a first iteration of a loop would load and one or more execution units to execute a plurality of instructions occurring after the load instruction in the first iteration of the loop to generate a plurality of results. Each of the plurality of results depends only on the value, one or more constant values, values derived therefrom, or any combination thereof. The processor also includes allocation circuitry to produce the plurality of results for the plurality of instructions each of one or more iterations of the loop after the first iteration without re-executing the plurality of instructions. The system also includes a dynamic random access memory (DRAM) coupled with the processor.

Example 18 includes the system of Example 17, further including a plurality of physical registers to store the plurality of results generated for the first iteration. Also optionally the allocation circuitry is to produce the plurality of results from the plurality of physical registers during each of the one or more iterations.

Example 19 includes the system of any one of Examples 17 to 18, further including a structure having a plurality of entries, where, during the first iteration of the loop: (1) an instruction pointer for the load instruction, the value predicted for the load instruction, and a destination physical register identifier for the load instruction, are to be stored in an entry of the structure, and (2) optionally at least one source physical register identifier and a destination physical register identifier are to be stored in different corresponding entries of the structure for each of the plurality of instructions.

Example 20 includes the system of any one of Examples 17 to 19, further including a commit unit coupled with the structure, the commit unit to commit the load instruction, where the instruction pointer for the load instruction, the value predicted for the load instruction, and the destination physical register identifier for the load instruction, are to be stored in the entry when the load instruction is committed.

Example 21 is a processor or other apparatus operative to perform the method of any one of Examples 1 to 10.

Example 22 is a processor or other apparatus that includes means for performing the method of any one of Examples 1 to 10.

Example 23 is a processor or other apparatus that includes any combination of modules and/or units and/or logic and/or circuitry and/or means operative to perform the method of any one of Examples 1 to 10.

## Claims

1. A method comprising:
predicting a value that a load instruction of a first iteration of a loop would load;
executing a plurality of instructions occurring after the load instruction in the first iteration of the loop to generate a plurality of results, wherein each of the plurality of results depends only on the value, one or more constant values, values derived from the value and/or the one or more constant values, or any combination thereof; and
producing the plurality of results for the plurality of instructions during each of one or more iterations of the loop after the first iteration without re-executing the plurality of instructions.

2. The method of claim 1, further comprising, storing the plurality of results generated for the first iteration in a plurality of physical registers, wherein producing comprises producing the plurality of results from the plurality of physical registers during each of the one or more iterations.

3. The method of any one of claims 1 to 2, wherein producing comprises producing the plurality of results during allocation.

4. The method of any one of claims 1 to 3, further comprising, during the first iteration of the loop:
storing an instruction pointer for the load instruction, the value predicted for the load instruction, and a destination physical register identifier for the load instruction, in an entry of a structure; and
storing at least one source physical register identifier and a destination physical register identifier for each of the plurality of instructions in a different corresponding entry of the structure.

5. The method of claim 4, wherein storing the instruction pointer comprises storing the instruction pointer for the load instruction, the value predicted for the load instruction, and the destination physical register identifier for the load instruction, in the entry of the structure when the load instruction is committed.

6. The method of any one of claims 4 to 5, further comprising storing each of the plurality of results generated for the first iteration in a destination physical register identified by the destination physical register identifier for a corresponding instruction, and wherein producing comprises producing each of the plurality of results from the destination physical register identified by the destination physical register identifier for the corresponding instruction.

7. The method of any one of claims 4 to 6, further comprising, during the first iteration of the loop:
indicating an execution elimination hit for the destination physical register identifier for the load instruction; and
indicating an execution elimination hit for the destination physical register identifier for each of the plurality of instructions.

8. The method of any one of claims 1 to 7, further comprising executing the load instruction during the first iteration and each of the one or more iterations, further comprising discarding the plurality of results produced during a given iteration of the one or more iterations if a value loaded by executing the load instruction during the given iteration differs from the value predicted for the load instruction.

9. An apparatus comprising:
a prediction unit to predict a value that a load instruction of a first iteration of a loop would load;
one or more execution units to execute a plurality of instructions occurring after the load instruction in the first iteration of the loop to generate a plurality of results, wherein each of the plurality of results depends only on the value, one or more constant values, values derived from the value and/or the one or more constant values, or any combination thereof; and
allocation circuitry to produce the plurality of results for the plurality of instructions each of one or more iterations of the loop after the first iteration without re-executing the plurality of instructions.

10. The apparatus of claim 9, further comprising a plurality of physical registers to store the plurality of results generated for the first iteration, wherein the allocation circuitry is to produce the plurality of results from the plurality of physical registers during each of the one or more iterations.

11. The apparatus of any one of claims 9 to 10, further comprising a structure having a plurality of entries, wherein, during the first iteration of the loop:
an instruction pointer for the load instruction, the value predicted for the load instruction, and a destination physical register identifier for the load instruction, are to be stored in an entry of the structure, and
at least one source physical register identifier and a destination physical register identifier are to be stored in different corresponding entries of the structure for each of the plurality of instructions.

12. The apparatus of claim 11, further comprising a commit unit coupled with the structure, the commit unit to commit the load instruction, wherein the instruction pointer for the load instruction, the value predicted for the load instruction, and the destination physical register identifier for the load instruction, are to be stored in the entry when the load instruction is committed.

13. The apparatus of any one of claims 9 to 12, wherein the one or more execution units are to execute the load instruction during the first iteration and each of the one or more iterations.

14. The apparatus of claim 13, further comprising circuitry to compare a value loaded by executing the load instruction during an iteration with the value predicted for the load instruction.

15. A computer program comprising instructions which, when the program is executed by a computer, cause the computer to carry out the method of any one of claims 1 to 8.
